(19) Europäisches Patentamt / European Patent Office / Office européen des brevets

(11) **EP 2 894 138 A1**

(12) **EUROPEAN PATENT APPLICATION**
published in accordance with Art. 153(4) EPC

(43) Date of publication:
**15.07.2015 Bulletin 2015/29**

(21) Application number: **13835512.8**

(22) Date of filing: **29.08.2013**

(51) Int Cl.:
*C04B 35/52* (2006.01)     *C22C 1/05* (2006.01)
*C22C 1/10* (2006.01)     *C22C 5/06* (2006.01)
*C22C 9/02* (2006.01)     *C22C 21/00* (2006.01)

(86) International application number:
**PCT/JP2013/073107**

(87) International publication number:
**WO 2014/038459 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.09.2012 JP 2012194135**

(71) Applicant: **Toyo Tanso Co., Ltd.**
**Osaka-shi**
**Osaka 555-0011 (JP)**

(72) Inventors:
• **NAKAMURA, Fumishige**
**Osaka-shi**
**Osaka 555-0011 (JP)**
• **MIYAMOTO, Yoshinari**
**Osaka-shi**
**Osaka 555-0011 (JP)**

(74) Representative: **Merkle, Gebhard**
**Ter Meer Steinmeister & Partner**
**Patentanwälte mbB**
**Mauerkircherstrasse 45**
**81679 München (DE)**

(54) **METAL-CARBON COMPOSITE MATERIAL, METHOD FOR PRODUCING METAL-CARBON COMPOSITE MATERIAL AND SLIDING MEMBER**

(57)     Provided are a metal-carbon composite material having good workability and a high carbon content and a method for producing the same. The metal-carbon composite material (1) includes a continuous metallic phase (3) and carbon particles (2) dispersed in the metallic phase (3). The carbon particle (2) includes a carbon base material and a ceramic layer covering the carbon base material.

[FIG. 1]

**Description**

Technical Field

This invention relates to metal-carbon composite materials and methods for producing the same.

Background Art

Carbon materials are materials having excellent characteristics, including light weight, high chemical and thermal stability, and additionally, despite non-metal, high thermal conductivity, high electrical conductivity, and self-lubricity, and are therefore widely used for various purposes. There is a need for the use of a composite of a carbon material and a metallic material depending upon the intended use.

However, carbon materials have difficulty forming composites with metallic materials because of their poor wettability with metal and have the disadvantage of being brittle. In view of these points, vigorous research and development has been heretofore conducted on methods for forming a composite of a carbon material and a metallic material.

A known method for producing a metal-carbon composite material is a method of impregnating a carbon material with a metal. For example, Patent Literature 1 discloses a method of impregnating a porous carbon material with aluminum. Patent Literature 2 discloses a method of impregnating a formed graphite body with aluminum, copper or an alloy of them under pressure.

Another known method for producing a metal-carbon composite material is a method of mixing a molten metal and a powdered carbon material together. For example, Patent Literature 3 discloses a method of mixing an aluminum alloy melt and graphite powder together with stirring. Patent Literature 4 discloses a method of introducing graphite particles into an aluminum alloy melt and then die-casting the mixture.

Citation List

Patent Literature

Patent Literature 1: JP-A-2003-34587
Patent Literature 2: JP-A-2010-67842
Patent Literature 3: JP-A-H06-297131
Patent Literature 4: JP-A-2003-138328

Summary of Invention

Technical Problem

However, the methods disclosed in Patent Literatures 1 to 4 have the disadvantage of having difficulty producing a metal-carbon composite material of high carbon content.

The present invention has been made in view of the foregoing points and an object thereof is to provide a metal-carbon composite material having good workability and a high carbon content and a method for producing the same.

Solution to Problem

A metal-carbon composite material of the present invention includes a continuous metallic phase and carbon particles. The carbon particles are dispersed in the metallic phase. The carbon particle includes a carbon base material and a ceramic layer. The ceramic layer covers the carbon base material.

The term "metal" used in the present invention encompasses metal alloys as well. Therefore, the term "metallic phase" encompasses "metal alloy phase" as well. In the present invention, the carbon particles may include those present in agglomerates with no metallic phase in between.

The ceramic layer of the metal-carbon composite material according to the present invention is preferably at least one selected from the group consisting of SiC, AlN, $Al_2O_3$, $Si_3N_4$, $B_4C$, TaC, NbC, ZrC, ZnO, $SiO_2$, and $ZrO_2$.

The ceramic layer of the metal-carbon composite material according to the present invention preferably has a thickness of 1 nm to 20 $\mu$m.

The metal-carbon composite material according to the present invention preferably has a carbon content of 50% or more by volume.

The metallic phase of the metal-carbon composite material according to the present invention preferably contains at least one selected from the group consisting of Al, Cu, Ag, Ni, Bi, Sb, and an alloy containing at least one of these metals.

The metallic phase of the metal-carbon composite material according to the present invention preferably contains 1% to 20% by mass metal silicon.

The metallic phase of the metal-carbon composite material according to the present invention preferably has a thickness of 10 nm to 100 $\mu$m.

The carbon particles of the metal-carbon composite material according to the present invention preferably have a particle size in a range of 50 nm to 500 $\mu$m.

In a method for producing a metal-carbon composite material according to the present invention, the step of obtaining carbon particles each including a carbon base material and a ceramic layer by coating the carbon base material with a ceramic and a mixing step of mixing metal particles and the carbon particles to obtain a mixture containing the carbon particles with the metal particles attached to the surfaces of the carbon particles are performed. The mixture is formed to obtain a green body. The green body is fired.

In the mixing step of the method for producing a metal-carbon composite material according to the present invention, a binder is preferably further mixed.

In the method for producing a metal-carbon composite material according to the present invention, the metal particles preferably have a particle size in a range of 1/100 to 1/5 of a particle size of the carbon particles.

In the method for producing a metal-carbon composite material according to the present invention, the forming of the mixture is preferably implemented by cold isostatic pressing.

A sliding member according to the present invention includes a continuous metal layer and carbon particles dispersed in the metal layer.

The sliding member according to the present invention preferably has a carbon content of 10% to 90% by volume.

The sliding member according to the present invention more preferably has a carbon content of 50% to 90% by volume. Advantageous Effects of Invention

The present invention can provide a metal-carbon composite material having good workability and a high carbon content.

Brief Description of Drawings

[Fig. 1] Fig. 1 is a schematic cross-sectional view showing a metal-carbon composite material in an embodiment according to the present invention.

[Fig. 2] Fig. 2 is a schematic cross-sectional view of a carbon particle.

[Fig. 3] Fig. 3 is an optical micrograph of a metal-carbon composite material obtained in Example 1.

[Fig. 4] Fig. 4 is a photograph of a section of a carbon particle in the metal-carbon composite material obtained in Experimental Example 1, wherein the section of the carbon particle was subjected to elemental analysis using a scanning electron microscope.

[Fig. 5] Fig. 5 is a graph showing an X-ray diffraction result of the surface of the metal-carbon composite material obtained in Example 1.

[Fig. 6] Fig. 6 is a graph showing an X-ray diffraction result of the surface of a metal-carbon composite material obtained in Comparative Example 1.

[Fig. 7] Fig. 7 is a graph showing dynamic friction coefficients of sliding members of Examples 2 and 3 and comparative materials.

Description of Embodiments

A description will be given below of an example of a preferred embodiment for working of the present invention. However, the following embodiment is simply illustrative. The present invention is not at all limited by the following embodiment.

The drawings to which the embodiment and the like refer are schematically illustrated, and the dimensional ratios and the like of objects illustrated in the drawings may be different from those of the actual objects. The dimensional ratios and the like of specific objects should be determined in consideration of the following descriptions.

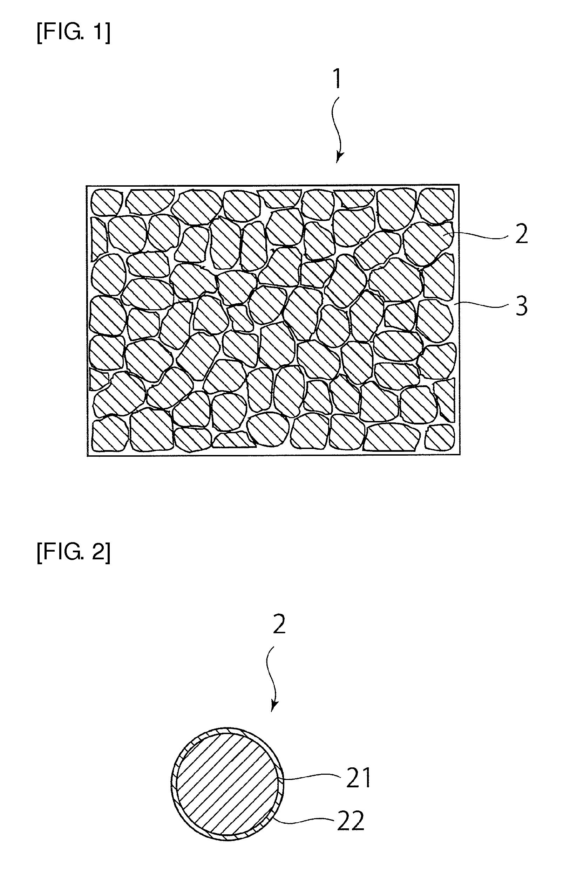

Fig. 1 is a schematic cross-sectional view showing a metal-carbon composite material in an embodiment according to the present invention. Fig. 2 is a schematic cross-sectional view showing a carbon particle contained in the metal-carbon composite material. In Fig. 1, the hatching of a metallic phase 3 is omitted for convenience of illustration.

As shown in Fig. 1, a metal-carbon composite material 1 includes a continuous metallic phase 3 and a plurality of carbon particles 2. This metal-carbon composite material 1 constitutes a sliding member. Specifically, the metal-carbon composite material 1 constituting a sliding member includes a continuous metallic layer 3 and a plurality of carbon particles 2 dispersed in the metallic layer 3.

The plurality of carbon particles 2 are dispersed in the metallic phase 3. Each carbon particle 2, as shown in Fig. 2, includes a carbon base material 21 and a ceramic layer 22. The carbon base material contains carbon as a major component. The ceramic layer 22 covers the carbon base material 21. The carbon base material 21 may contain components other than carbon. The carbon base material 21 can be constituted, for example, by a graphite particle. The preferred graphite particle for use is, for example, natural graphite, mesophase pitch-based graphite, artificial graphite, kish graphite, or a graphitized substance of mesophase spherule. The carbon base materials 21 may include a single type of carbon particles or a plurality of types of carbon particles.

The preferred ceramic for use to form the ceramic layer 22 is, for example, SiC, AlN, $Al_2O_3$, $Si_3N_4$, $B_4C$ (boron carbide), TaC, NbC, ZrC, ZnO, $SiO_2$, or $ZrO_2$. The ceramic layer 22 may contain a single type of ceramic or a plurality of types of ceramics.

Examples of a method for forming the ceramic layer 22 on the surface of each carbon particle include a CVR method, a gas phase method, a liquid phase method, a mechanical mixing method or a combined method of them. Other methods for forming ceramic-coated powder include a method in which carbon particles are added into a slurry of ceramic particles to attach ceramic particles to the surface of each carbon particle and thus form a ceramic layer thereon.

The thickness of the ceramic layer 22 is preferably in a range of 1 nm to 20 $\mu$m, more preferably in a range of 200 nm to 10 $\mu$m, and still more preferably in a range of 500 nm to 5$\mu$ m.

The particle size of the carbon particles 2 is preferably about 50 nm to about 500 $\mu$m, more preferably about 1 $\mu$m to about 250 $\mu$m, and still more preferably about 5 $\mu$m to about 100 $\mu$m. If the particle size of the carbon particles 2 is too small, the carbon particles 2 will be likely to agglomerate. If the carbon particles 2 agglomerate too much, not only the material workability may degrade but also the strength may decrease. If the carbon particles 2 are too large, the texture of the metal-carbon composite material 1 will be rough, such as uneven thickness of the metallic phase 3, which may decrease the workability and strength.

The metallic phase 3 is preferably formed of a metal unlikely to form a carbide by reaction with carbon. Specific examples of the preferred metal for use as a constituent material of the metallic phase 3 include such metals as Al, Cu, Ag, Ni, Bi, and Sb; and alloys containing at least one of these metals. The metal layer 3 may contain 1% to 20% by mass metal silicon.

The thickness of the metallic phase 3 is generally preferably in a range of about 10 nm to about 100 $\mu$m and more preferably in a range of about 1 $\mu$m to about 10 $\mu$m. The term "thickness of the metallic phase 3" in the present invention refers to a value measured by texture observation with an optical microscope or a scanning electron microscope.

The carbon content of the metal-carbon composite material 1 is preferably 10% or more by volume and more preferably 50% or more by volume. The carbon content of the metal-carbon composite material 1 is preferably about 50% to about 99% by volume, more preferably about 60% to about 95% by volume, and still more preferably about 70% to about 90% by volume. In the present invention, the carbon content of the metal-carbon composite material 1 refers to a value calculated from the composition ratio among source materials.

The metallic phase 3 of the metal-carbon composite material 1 has a continuous structure. The metallic phase 3 preferably has a three-dimensional network. The metallic phase 3 lies between the plurality of carbon particles 2. The plurality of carbon particles 2 are connected and integrated by the metallic phase 3. In other words, the metal-carbon composite material 1 has a structure in which the plurality of carbon particles 2 are surrounded by the continuous metallic phase 3. Therefore, the metal-carbon composite material 1 can contain 50% or more by volume carbon. The metallic phase 3 may be composed of a single continuous metallic phase or a plurality of isolated metallic phases. Furthermore, in the metal-carbon composite material 1, the carbon particles 2 may be dispersed in agglomerates in the metallic phase 3. However, the carbon particles 2 are preferably dispersed in the metallic phase 3 to the extent that the metal-carbon composite material 1 can be plastically worked.

The metal-carbon composite material 1 has excellent workability. This can be attributed to the fact that in the metal-carbon composite material 1 of this embodiment the carbon particles 2 are present as particles independent of the metallic phase 3. In other words, the reason can be attributed to that when the metal-carbon composite material 1 is subjected to an external force, the carbon particles 2 do not interfere with plastic deformation of the metallic phase 3.

The metal-carbon composite material 1 has high strength. This can be attributed to that at ordinary temperature, the metal exhibits no fluidity and the metallic phase 3 acts as a filler.

The metal-carbon composite material 1 contains 50% or more by volume carbon. Therefore, the metal-carbon composite material 1 has a low specific gravity and has self-lubricity which is a characteristic of carbon.

The metal-carbon composite material 1 contains the carbon particles 2 and the metallic phase 3 therein is continuous. Therefore, the metal-carbon composite material 1 has excellent electrical conductivity and excellent thermal conductivity.

Since the metal-carbon composite material of this embodiment has excellent characteristics as described above, it can be favorably used as a sliding member, a heat radiating member for a semiconductor or an LED, a sealing material or the like.

Since the metal-carbon composite material 1 includes the continuous metallic layer 3 and the carbon particles 2 dispersed in the metallic layer 3, the metallic phase 3 acts as a filler, so that the metal-carbon composite material 1 has high strength. Furthermore, the metal-carbon composite material 1 has excellent electrical conductivity and excellent thermal conductivity.

The metal-carbon composite material 1 can be used suitably as a sliding member. In the metal-carbon composite material 1, during sliding movement, the carbon particles 2 contained in the metal-carbon composite material 1 develop self-lubricity and the metallic phase 3 having a continuous structure promotes elimination of frictional heat and static electricity produced during the sliding movement from the sliding surface. Thus, reduction in dynamic friction coefficient and improvement in frictional resistance, particularly, during sliding movement over a long time can be provided. In addition, the metallic phase 3 having a continuous structure significantly increases the strength of the metal-carbon composite material 1, thereby reducing the risk of partial deletion during sliding movement and breakage under load.

When the metal-carbon composite material 1 constitutes a sliding member, the carbon content of the metal-carbon composite material 1 is preferably 10% to 90% by volume. If the carbon content is below 10% by volume, the self-lubricity of carbon is less likely to be exerted. If the carbon content is over 90% by volume, the metallic phase 3 is less likely to have a continuous structure. In either case, the aforementioned effects may be less likely to be developed. Furthermore, from the viewpoint of developing the self-lubricity of carbon, the carbon content is more preferably 50% to 90% by volume. In the present invention, the carbon content of the metal-carbon composite material 1 refers to a value calculated from the composition ratio among source materials.

A description will be given below of an example of a method for producing the metal-carbon composite material 1.

(Ceramic Layer Coating Step)

First, carbon base materials 21 are coated with a ceramic to form carbon particles 2 each including the carbon base material 21 and a ceramic layer 22 covering the carbon base material 21. The carbon base materials 21 that can be used are as described previously. Examples of the method for forming the ceramic layer 22 include a gas phase method, a liquid phase method, a mechanical mixing method, a combined method of them, and a method in which carbon base materials 21 are added into a slurry of ceramic particles to attach ceramic particles to the surface of each carbon particle and thus form a ceramic layer 22 thereon. Preferably, using a CVR method, a uniform ceramic layer 22 can be formed around the carbon base material 21. The CVR method is, for example, a method in which carbon base materials 21 in powder form and metal oxide powder are put into a graphite crucible, heated therein under vacuum, and held for a certain time, so that the metal in the evaporated metal oxide reacts with the surfaces of the carbon base materials 21 to convert the surfaces of the carbon base materials 21 into a ceramic and thus form a ceramic layer 22.

(Mixing Step)

Next, a mixing step is performed. In the mixing step, the carbon particles 2 and metal particles are mixed together to obtain a mixture containing the carbon particles 2 with the metal particles attached to the surfaces of the carbon particles 2.

The metal particles are particles made of a metal constituting the metallic phase 3. The particle size of the metal particles is preferably in a range of 1/100 to 1/5 of the particle size of the carbon particles. In this case, substantially the entire surface of each carbon particle 2 can be covered with the metal particles. The particle size of the metal particles is more preferably in a range of 1/50 to 1/10 of that of the carbon particles 2 and still more preferably in a range of 1/40 to 1/20 of the same.

The mixture ratio between the carbon particles 2 and the metal particles can be appropriately selected depending upon the carbon content of a desired metal-carbon composite material 1. If a metal-carbon composite material 1 having a high carbon content is desired, the ratio of the carbon particles 2 to the metal particles should be increased. However, if the ratio of the carbon particles 2 to the metal particles is too high, the metal content of the metal-carbon composite material 1 will be too small. Thus, the metallic phase 3 may not be able to be suitably formed. From the viewpoint of suitably forming the metallic phase 3, the mixture ratio between the carbon particles 2 and the metal particles is preferably to such an extent that the surface of each carbon particle 2 is substantially entirely covered with the metal particles.

In addition to a metal constituting the metallic phase 3, a metal silicon may be mixed with the metal particles. The mixing of a metal silicon can reduce the degree of formation of a metal carbide resulting from the reaction of the metal constituting the metallic phase 3 with carbon in the carbon particles 2.

The mixing of the meal particles and the carbon particles 2 can be implemented, for example, by any mechanical mixing method, any slurry method or a combined method of them.

The mechanical mixing method is a method of mechanically mixing the metal particles and the carbon particles 2. A specific example of the mechanical mixing method is a method in which the metal particles and the carbon particles 2 are mixed, for example, using a planetary centrifugal mixer.

In order to attach the metal particles uniformly to the surfaces of the carbon particles 2, a binder should preferably be mixed in addition to the carbon particles 2 and the metal particles. Usable binders are, for example, known binders. Specific examples of preferred usable binders include, for example, PVA (polyvinyl alcohol) and PVB (polyvinyl butyral).

The slurry method is a method in which the carbon particles 2 and the metal particles are prepared in slurry form and mixed. Specific examples of the slurry method include, for example, the gel-casting method and the slip-casting method. The gel-casting method can be implemented, for example, in the following manner.

In the gel-casting method, the metal particles, a solvent in liquid form, and a binder are mixed together to form a slurry, the carbon particles 2 are added into the slurry and mixed together, and the mixture is then dried, resulting in a solid mixture. For example, the metal particles and the carbon particles 2 are added to an isopropanol organic solvent to which acrylamide and N,N'-methylenebisacrylamide are added as binders, the mixture is stirred in a planetary centrifugal mixer to prepare a slurry, and the slurry is poured into a die and dried, resulting in a solid mixture.

(Forming Step)

Next, the mixture is formed to obtain a green body. The forming of the mixture can be implemented, for example, by pressing using a pressing machine, such as cold isostatic pressing (CIP).

The mixing in the mixing step and the forming in the forming step may be concurrently performed. For example, in the mixing step, the carbon particles 2 and the metal particles may be mixed together and concurrently formed in a desired shape by the gel-casting method.

No particular limitation is placed on the constituent material of a forming die for use as the die in the pressing machine. For example, a forming die made of graphite can be preferably used.

(Firing Step)

Next, the green body is fired. Thus, a metal-carbon composite material 1 can be obtained that has a structure in which the plurality of carbon particles 2 are dispersed in the continuous metallic phase 3. The firing temperature and firing time of the green body, the type of firing atmosphere, the pressure in the firing atmosphere and so on can be appropriately selected depending upon the materials, shapes, sizes, and so on of the metal particles and the carbon particles 2. The firing temperature of the green body can be, for example, the softening temperature to the melting temperature of the metal constituting the metal particles. The firing time of the green body can be, for example, about one minute to about one hundred minutes. The type of firing atmosphere can be, for example, vacuum atmosphere or inert gas atmosphere, such as nitrogen or argon. The pressure in the firing atmosphere can be, for example, about 0.2 MPa to about 100 MPa.

(Plastic Working Step)

The obtained metal-carbon composite material 1 may be further subjected to a plastic working step. The plastic working step is the step of changing the shape of the metal-carbon composite material 1 by applying heat and pressure to the metal-carbon composite material 1 while pressing it against a forming die or the like. For example, by making the to-be-fired green body into a shape suitable for the firing and then working the fired body into a desired shape in the plastic working step, a metal-carbon composite material 1 can be easily obtained which has been suitably fired and has the desired shape.

The working temperature in the plastic working step can be the softening temperature to the melting temperature of the metal constituting the metal particles. The pressure to be applied to the metal-carbon composite material 1 in the plastic working step can be, for example, about 0.2 MPa to about 100 MPa.

(Joining Step)

The metal-carbon composite material 1 includes the metallic phase 3 surrounding the carbon particles 2. In other words, the metallic phase 3 is exposed on at least a portion of the surface of the metal-carbon composite material 1. Therefore, for example, after a plurality of metal-carbon composite materials 1 are produced, they can be easily joined together by bringing them into contact with each other and heating them with pressure. Hence, a large-size metal-carbon composite material 1 can be easily produced by producing a plurality of metal-carbon composite materials and then joining them.

The heating temperature and pressure during the joining can be appropriately selected depending upon the type of the metallic phase 3, the size of the metal-carbon composite materials to be joined, the joining area thereof, and so on. The heating temperature during the joining may be, for example, the softening temperature to the melting temperature of the metal constituting the metal particles. The pressure to be applied during the joining can be, for example, about 0.2 MPa to about 100 MPa.

With the method for producing the metal-carbon composite material 1 of this embodiment, the contents of carbon and metal in the metal-carbon composite material 1 can be controlled by controlling the rate of the metal particles to be attached to the carbon particles 2 with respect to the carbon particles 2. The metal particles have only to be present to the extent that they can bond a plurality of carbon particles 2 together in the firing step. Therefore, the content of the metal particles in the green body can be 50% or less by volume. Thus, a metal-carbon composite material 1 having a carbon content of 50% or more by volume can be obtained.

In the method for producing the metal-carbon composite material 1 of this embodiment, the metal particles are attached to the surfaces of the carbon particles 2 and then the mixture of the carbon particles 2 and the metal particles is formed and fired. Therefore, the resultant metal-carbon composite material 1 has a structure in which the plurality of carbon particles 2 are surrounded by the continuous metallic phase 3. Thus, a metal-carbon composite material 1 can be obtained in which the carbon particles 2 are homogeneously dispersed in the metallic phase 3. In particular, by selecting the particle size of the metal particles within a range of 1/100 to 1/5 of the particle size of the carbon particles 2 and covering substantially the entire surface of each carbon particle 2 with the metal particles, the continuity of the metallic phase 3 can be further increased. Thus, the metal-carbon composite material 1 can possess, upon application of heat, plasticity resulting from the fluidity of the metal and can be improved in thermal conductivity and electrical conductivity as a whole.

Hereinafter, the present invention will be described in more detail with reference to specific examples. The present invention is not at all limited by the following examples. Modifications and variations may be appropriately made therein without changing the gist of the present invention.

(Example 1)

SiO powder having an average particle size of 300 $\mu$m was used as metal oxide powder. Artificial graphite particles having an average particle size of 20 $\mu$m were used as carbon base materials. The SiO powder and the artificial graphite particles were homogeneously mixed and the mixture was placed into a graphite crucible and subjected therein to heat treatment under a pressure of 20 Pa or less at a 1500°C for two hours to obtain carbon particles with an average particle size of 20 $\mu$m in each of which a ceramic layer of SiC was formed uniformly on the surface of a carbon base material of graphite. The SiC content of the carbon particle was 20% by weight and the thickness of the ceramic layer thereon was 1 $\mu$m.

Aluminum powder (3.56 g) having a particle size of 1 $\mu$m, metal silicon powder (0.48 g) having a particle size of 1 $\mu$m, acrylamide (8 g), and a binder solution (4.5 g) containing N,N'-methylenebisacrylamide (1 g) dissolved in isopropanol (45 g) were stirred by planetary centrifugal mixing to obtain a mixture. The planetary centrifugal mixing was performed at 2000 rpm for 60 seconds . An amount of 10 g of the aforementioned carbon particles were added to the obtained mixture and mixed together with stirring at 2000 rpm for 180 seconds by planetary centrifugal mixing. Next, the mixture was dried at 80°C for 8 hours to obtain a dry product. The dry product was formed by cold isostatic pressing (CIP) to obtain a green body. The pressure during CIP was 200 MPa.

Next, the obtained green body was put into a cylindrical graphite die and fired in a hot-pressing furnace, resulting in a metal-carbon composite material. In the firing step, the green body was first heated at 20°C/min from room temperature to 700°C, held at 700°C for 20 minutes, and then cooled at 10 to 15°C/min to room temperature over approximately two hours. The resultant metal-carbon composite material had a columnar shape of 10 mm height and 30 mm diameter. The carbon content in the metal-carbon composite material was 75% by volume.

(Comparative Example 1)

A metal-carbon composite material of Comparative Example 1 was obtained in the same manner as in Example 1 except that carbon particles with no ceramic layer formed thereon were used and the whole of the metal silicon powder was replaced with aluminum powder. The carbon content in the metal-carbon composite material was 75% by volume.

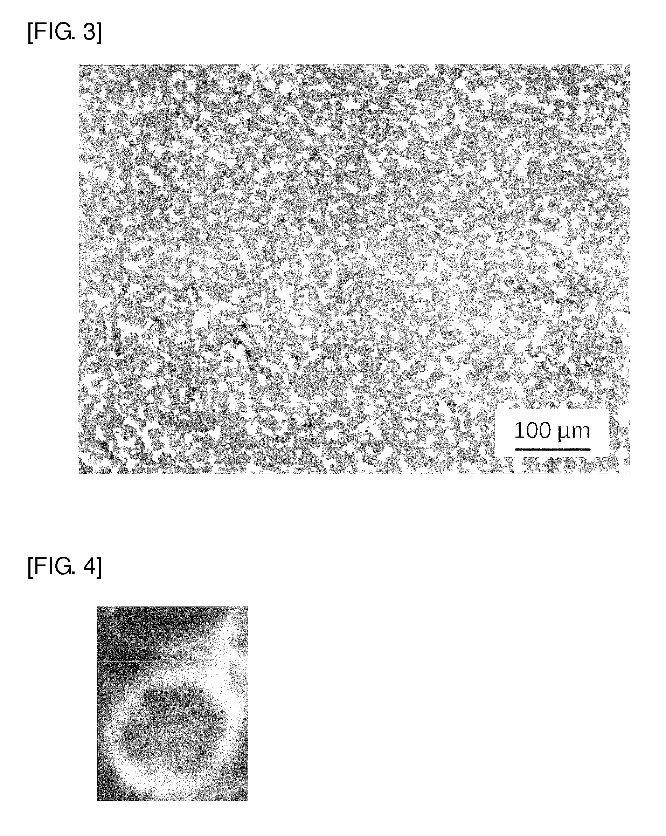

An optical micrograph of the aluminum-carbon composite material obtained in Example 1 is shown in Fig. 3. In Fig. 3, the dark-colored portions show carbon particles and the pale-colored portions show aluminum. The photograph shown in Fig. 3 reveals that the carbon particles are coated with aluminum and the aluminum forms a continuous phase.

When a metal-carbon composite material is made by firing or sintering, a metal carbide is produced. Among metal carbides are those converted into a hydroxide by reaction with moisture in the air. In this example, the aluminum powder reacts with the carbon base materials to produce $Al_4C_3$. If $Al_4C_3$ is converted into aluminum hydroxide by reaction with moisture in the air, the composite may cause aging degradation, such as the occurrence of cracks and material collapse.

The respective heats of reaction produced by reaction between aluminum and carbon and reaction between aluminum and silicon carbide at 700°C are as shown in the following equations (1) and (2).

$$4/3Al+C \rightarrow 1/3Al_4C_3 \ \Delta G_{973} = -58 \ kJ/mol \ ... \ (1)$$

$$4/3Al+SiC \rightarrow 1/3Al_4C_3+Si \ \Delta G_{973} = -6 \ kJ/mol \ ... \ (2)$$

The reaction rate depends upon the magnitude of heat of reaction. The smaller the heat of reaction, the lower the reaction rate. Therefore, it can be considered that the metal-carbon composite material with each carbon particle coated with a ceramic layer of SiC is less likely to produce $Al_4C_3$ than the metal-carbon composite material with each carbon particle coated with no ceramic layer and can reduce the occurrence of the aforementioned inconveniences due to conversion into aluminum hydroxide.

Fig. 4 is a photograph of a section of a carbon particle in the metal-carbon composite material in Example 1, wherein the section of the carbon particle was subjected to elemental analysis using a scanning electron microscope. The dark-colored portions show Al and C and the pale-colored portions show Si. Since the circular portion surrounded by Si is a carbon base material, it can be clearly seen that SiC fully covers the entire carbon base material and therefore $Al_4C_3$ is less likely to be produced.

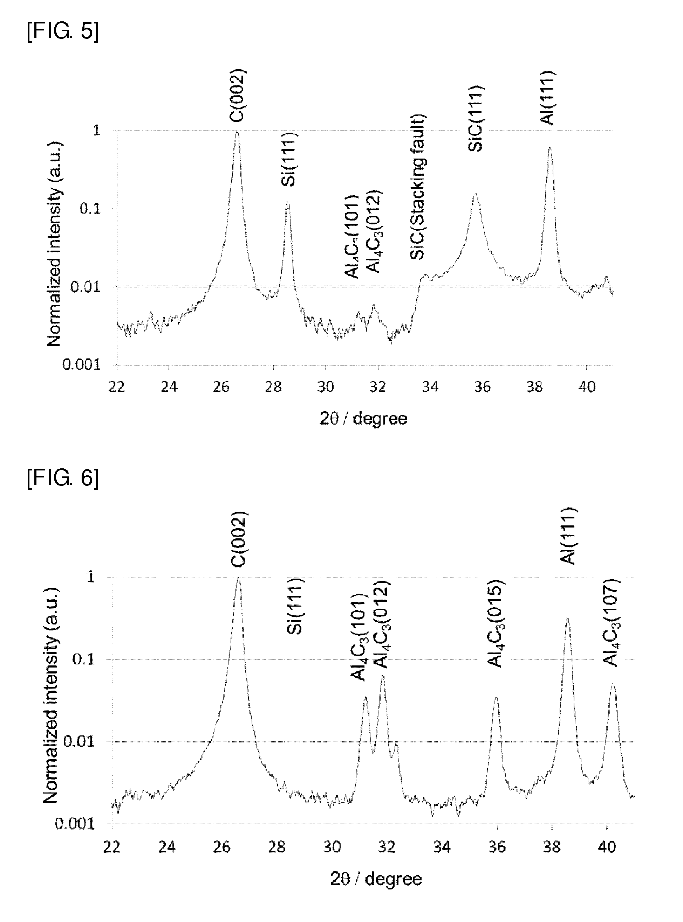

Figs. 5 and 6 show X-ray diffraction results of the surfaces of the metal-carbon composite materials of Example 1 and Comparative Example 1, respectively. Fig. 5 shows few peaks derived from $Al_4C_3$ and reveals that the production of $Al_4C_3$ could be significantly reduced. On the other hand, Fig. 6 shows clear peaks derived from $Al_4C_3$ and reveals that $Al_4C_3$ was produced during firing or sintering.

(Example 2)

Aluminum powder (4.04 g) having a particle size of 1 $\mu$m, acrylamide (8 g), and a binder solution (4.5 g) containing N,N'-methylenebisacrylamide (1 g) dissolved in isopropanol (45 g) were stirred by planetary centrifugal mixing to obtain a mixture. The planetary centrifugal mixing was performed at 2000 rpm for 60 seconds. An amount of 10 g of mesophase graphite particles having a particle size of 20 $\mu$m were added to the obtained mixture and mixed together with stirring at 2000 rpm for 180 seconds by planetary centrifugal mixing. Next, the mixture was dried at 80°C for 8 hours to obtain a dry product. The dry product was formed by cold isostatic pressing (CIP) to obtain a green body. The pressure during CIP was 200 MPa.

Next, the obtained green body was put into a cylindrical graphite die and fired in a hot-pressing furnace, resulting in a metal-carbon composite material. In the firing step, the green body was first heated at 20°C/min from room temperature to 700°C, held at 700°C for 20 minutes, and then cooled at 10 to 15°C/min to room temperature over approximately two hours. The resultant sliding member had a columnar shape of 10 mm height and 30 mm diameter. The carbon content in the sliding member was 75% by volume.

(Example 3)

A sliding member of Example 3 was obtained in the same manner as in Example 2 except that the amount of mesophase graphite particles added was 3.3 g. The carbon content in the sliding member was 25% by volume.

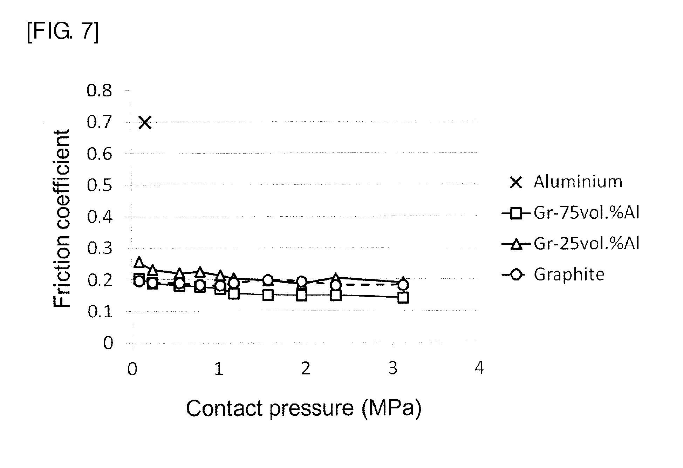

The sliding members of Examples 2 and 3 were cut in a cylindrical shape of 4 mm diameter and 9 mm height. A circular end surface of each cut sliding member was pressed with various predetermined loads against a disc made of aluminum (JIS grade: A1050) with the rotation of the disc so that the sliding member slid on the aluminum material at a rate of 800 mm/sec. Frictional forces produced during this test were measured and dynamic friction coefficients for every load applied were calculated from the measured frictional forces. The same test was conducted on the sliding member of graphite material (IG-11 manufactured by Toyo Tanso Co., Ltd.) and the sliding member of aluminum material (JIS grade: A1050). The results are shown in Fig. 7.

The sliding member using the aluminum material exhibited a dynamic friction coefficient of 0.7 at an applied load of 0.2 MPa, whereas the sliding members using the other materials exhibited a small dynamic friction coefficient of 0.3 or less at the same load. In a range of applied loads of 0.1 to 1.0 MPa, Examples 2 and 3 were obviously superior to the sliding member of aluminum material and exhibited an equivalent dynamic friction coefficient to the sliding member of graphite material. This shows that the metal-carbon composite materials of Examples 2 and 3 have high mechanical strength and simultaneously have slidability equivalent to graphite material.

In a range of applied loads of 1.2 to 3.2 MPa, the metal-carbon composite material of Example 2 exhibited a smaller dynamic friction coefficient than the other sliding members, which shows that the metal-carbon composite material of Example 2 has excellent slidability under high pressure. In comparison between the amounts of friction of Examples 2 and 3, the amount of friction of Example 2 is significantly smaller. Therefore, Example 2 can be considered to be superior in frictional resistance.

Industrial Applicability

Among metal-carbon composite materials according to the present invention, one with a metallic phase of Ag and a metal content of 75% to 90% by volume, one with a metallic phase of Ag-10Ni and a metal content of 75% to 80% by volume, and one with a metallic phase of Cu and a metal content of 90% to 99% by volume can be suitably used as electric contacts. A metal-carbon composite material with a metallic phase of Cu-4.5Sn-2Pb and a metal content of 85% to 95% by volume can be suitably used as a high-speed bearing. A metal-carbon composite material with a metallic phase of Al-Si and a metal content of 90% to 99% by volume can be suitably used as a sliding member, a bearing or a piston. A metal-carbon composite material with a metallic phase of Al-4.5Cu and a metal content of 50% to 95% by volume can be suitably used as a sliding member. A metal-carbon composite material with a metallic phase of Al-4.5Cu and a metal content of 95% to 99% by volume can be suitably used as a bearing. Reference Signs List

1    metal-carbon composite material
2    carbon particle
21    carbon base material
22    ceramic layer
3    metallic phase

**Claims**

1. A metal-carbon composite material comprising:

   a continuous metallic phase; and
   carbon particles dispersed in the metallic phase,
   wherein the carbon particle includes a carbon base material and a ceramic layer covering the carbon base material.

2. The metal-carbon composite material according to claim 1, wherein the ceramic layer is made of at least one selected from the group consisting of SiC, AlN, $Al_2O_3$, $Si_3N_4$, $B_4C$, TaC, NbC, ZrC, ZnO, $SiO_2$, and $ZrO_2$.

3. The metal-carbon composite material according to claim 1 or 2, wherein the ceramic layer has a thickness of 1 nm to 20 $\mu$m.

4. The metal-carbon composite material according to any one of claims 1 to 3, having a carbon content of 50% or more by volume.

5. The metal-carbon composite material according to any one of claims 1 to 4, wherein the metallic phase contains at least one selected from the group consisting of Al, Cu, Ag, Ni, Bi, Sb, and an alloy containing at least one of these metals.

6. The metal-carbon composite material according to any one of claims 1 to 5, wherein the metallic phase contains 1% to 20% by mass metal silicon.

7. The metal-carbon composite material according to any one of claims 1 to 6, wherein the metallic phase has a thickness of 10 nm to 100 $\mu$m.

8. The metal-carbon composite material according to any one of claims 1 to 7, wherein the carbon particles have a particle size in a range of 50 nm to 500 $\mu$m.

9. A method for producing a metal-carbon composite material, the method comprising:

   the step of obtaining carbon particles each including a carbon base material and a ceramic layer by coating the carbon base material with a ceramic;
a mixing step of mixing metal particles and the carbon particles to obtain a mixture containing the carbon particles with the metal particles attached to the surfaces of the carbon particles;
the step of forming the mixture to obtain a green body; and
the step of firing the green body.

10. The method for producing a metal-carbon composite material according to claim 9, wherein in the mixing step a binder is further mixed.

11. The method for producing a metal-carbon composite material according to claim 9 or 10, wherein the metal particles have a particle size in a range of 1/100 to 1/5 of a particle size of the carbon particles.

12. The method for producing a metal-carbon composite material according to any one of claims 9 to 11, wherein the forming of the mixture is implemented by cold isostatic pressing.

13. A sliding member comprising:

a continuous metallic phase; and
carbon particles dispersed in the metallic phase.

14. The sliding member according to claim 13, having a carbon content of 10% to 90% by volume.

15. The sliding member according to claim 14, having a carbon content of 50% to 90% by volume.

[FIG. 1]

1

2

3

[FIG. 2]

2

21

22

[FIG. 3]

[FIG. 4]

[FIG. 5]

[FIG. 6]

[FIG. 7]

**INTERNATIONAL SEARCH REPORT**

| International application No. |
| --- |
| PCT/JP2013/073107 |

A. CLASSIFICATION OF SUBJECT MATTER
*C04B35/52*(2006.01)i, *C22C1/05*(2006.01)i, *C22C1/10*(2006.01)i, *C22C5/06* (2006.01)i, *C22C9/02*(2006.01)i, *C22C21/00*(2006.01)i

According to International Patent Classification (IPC) or to both national classification and IPC

B. FIELDS SEARCHED

Minimum documentation searched (classification system followed by classification symbols)
C04B35/52, C22C1/05, C22C1/10, C22C5/06, C22C9/02, C22C21/00

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho  1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2002-80280 A  (Sumitomo Electric Industries, Ltd.),<br>19 March 2002 (19.03.2002),<br>claims 1, 2, 5, 6; paragraphs [0028] to [0037]; examples 1 to 6; fig. 1<br>& US 2002/0041959 A1     & EP 1168438 A2 | 1-5,7,8<br>6,13-15<br>9-12 |
| X<br>A | JP 52-822 B2  (Nippon Carbon Co., Ltd.),<br>11 January 1977 (11.01.1977),<br>claim 2; page 2, left column, line 1 to right column, line 41; examples 3 to 6<br>(Family: none) | 1-8,13-15<br>9-12 |

| ☒ Further documents are listed in the continuation of Box C. | ☐ See patent family annex. |
| --- | --- |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    01 November, 2013 (01.11.13) | Date of mailing of the international search report<br>    12 November, 2013 (12.11.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/073107

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2003-138328 A  (Oiles Corp.),<br>14 May 2003 (14.05.2003),<br>claims 1, 2, 6, 9; paragraphs [0022], [0026];<br>fig. 1 to 4<br>(Family: none) | 1,3,5-8,13<br>4,9-12,14,15<br>2 |
| X<br>Y<br>A | JP 2003-313076 A  (Aisin Seiki Co., Ltd.),<br>06 November 2003 (06.11.2003),<br>claims; paragraphs [0035], [0054], [0061] to<br>[0071]<br>(Family: none) | 13-15<br>9-12<br>1-8 |
| Y | WO 2006/103798 A1  (Hitachi Metals, Ltd.),<br>05 October 2006 (05.10.2006),<br>paragraphs [0035] to [0037]<br>& US 2009/0035562 A1    & EP 1876249 A1<br>& CN 101151384 A        & KR 10-2007-0114133 A | 9-12 |
| Y | JP 10-140265 A  (Zexel Corp.),<br>26 May 1998 (26.05.1998),<br>paragraphs [0021] to [0023]<br>(Family: none) | 9-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003034587 A
- JP 2010067842 A
- JP H06297131 A
- JP 2003138328 A